# EUROPEAN PATENT SPECIFICATION

(11) **EP 2 593 983 B1**
(45) Date of publication and mention of the grant of the patent: **15.01.2014**
(21) Application number: 11757930.0
(22) Date of filing: 14.07.2011
(51) Int. Cl.: H01M 4/38, H01M 4/58, H01M 4/62, H01M 4/36, H01M 10/052, C01B 3/00

(54) **ANODE MATERIAL, METAL SECONDARY BATTERY, AND METHOD FOR PRODUCTION OF ANODE MATERIAL**
ANODENMATERIAL, METALLAKKUMULATOR UND VERFAHREN ZUR HERSTELLUNG EINES ANODENMATERIALS
MATÉRIAU D'ANODE, BATTERIE SECONDAIRE EN MÉTAL, ET PROCÉDÉ POUR LA PRODUCTION D'UN MATÉRIAU D'ANODE

(30) Priority: 07.10.2010 JP 2010227476; 15.07.2010 JP 2010160402
(43) Date of publication of application: 22.05.2013
(73) Proprietor: TOYOTA JIDOSHA KABUSHIKI KAISHA, Toyota-shi, Aichi-ken, 471-8571 (JP)
(72) Inventor: NAKAYAMA, Hideki, Aichi-ken 471-8571 (JP); MATSUNAGA, Tomoya, Aichi-ken 471-8571 (JP); NOBUHARA, Kunihiro, Aichi-ken 471-8571 (JP); KON, Makio, Aichi 470-0334 (JP)
(74) Representative: Kuhnen & Wacker
(86) International application number: PCT/IB2011/001638
(87) International publication number: WO 2012/007830

(56) References cited:
- US-A1- 2008 286 652
- Y. OUMELLAL, A. ROUGIER, G. A. NAZRI, J-M. TARASCON, L. AYMARD: "Metal hydrides for lithium-ion batteries", NATURE MATERIALS, vol. 7, 12 October 2008 (2008-10-12), pages 916-921, XP002664402, DOI: 10.1038/nmat2288
- HANADA N ET AL: "Catalytic effect of Ni nano-particle and Nb oxide on H-desorption properties in MgH2 prepared by ball milling", JOURNAL OF ALLOYS AND COMPOUNDS, ELSEVIER SEQUOIA, LAUSANNE, CH, vol. 404-406, 8 December 2005 (2005-12-08) , pages 716-719, XP025330296, ISSN: 0925-8388, DOI: 10.1016/J.JALLCOM.2004.12.166 [retrieved on 2005-12-08]
- LIANG G ET AL: "Catalytic effect of transition metals on hydrogen sorption in nanocrystalline ball milled MgH2-Tm (Tm=Ti, V, Mn, Fe and Ni) systems", JOURNAL OF ALLOYS AND COMPOUNDS, ELSEVIER SEQUOIA, LAUSANNE, CH, vol. 292, no. 1-2, 15 November 1999 (1999-11-15), pages 247-252, XP004364567, ISSN: 0925-8388, DOI: 10.1016/S0925-8388(99)00442-9

## Description

### BACKGROUND OF THE INVENTION

### 1. Field of the Invention

The present invention relates to a metal secondary battery and to an anode material that utilizes a conversion reaction, and, more particularly, to an anode material that improves the charge-discharge efficiency of a metal secondary battery.

### 2. Description of Related Art

With the recent rapid spread of information and communication devices such as personal computers, video cameras and cellular phones, the development of batteries that are used as power sources for the devices is regarded as important. In the automotive industries, high-output and high-capacity batteries for electrical or hybrid vehicles are under development. Attention is currently focused on lithium batteries among various batteries because of their high energy density.

As an anode active material for use in lithium batteries, metal hydrides (MHx) as conversion type anode active materials, for example, are known. For example, US 2008/0286652A describes MgH₂ as a conversion type anode active material. When MgH₂ is used as an active material, the following electrochemical behaviors occur:

During charging: MgH₂ + 2Li⁺ + 2e⁻ → Mg + 2LiH (Reaction formula 1)

During discharging: Mg + 2LiH → MgH₂ + 2Li⁺ + 2e⁻ (Reaction formula 2)

### SUMMARY OF THE INVENTION

A problem of MgH₂ has the low reversibility of the conversion reaction. Specifically, the reaction that is represented by the reaction formula 2 is less likely to occur than the reaction that is represented by the reaction formula 1. Thus, a metal secondary battery that uses MgH₂ has low charge-discharge efficiency. The present invention provides a metal secondary battery that comprises an anode material that improves the charge-discharge efficiency of a metal secondary battery.

The present invention relates to a metal secondary comprising an anode material. The anode material contains MgH₂, and a metal catalyst which is in contact with the MgH₂ and improves the reversibility of a conversion reaction.

According to the present invention, addition of the metal catalyst to an active material MgH₂ promotes the reaction that is represented by the reaction formula 2, for example. As a result, the charge-discharge efficiency of a metal secondary battery can be improved.

In the anode material, the metal catalyst may be a catalyst that dissociates LiH or a catalyst that dissociatively adsorbs hydrogen.

In the anode material, the metal catalyst may contain a transition metal element. This is because it is believed that the 3d, 4d and 4f orbits of transition metal elements improve the reversibility of the conversion reaction.

In the anode material, the transition metal element may be at least one element that is selected from the group that consists of Ti, V, Cr, Mn, Co, Ni, Zr, Nb, Pd, La, Ce and Pt. This is because the charge-discharge efficiency of a metal secondary battery can be significantly improved as described in Examples, which are described later.

In the anode material, the metal catalyst may be composed of a pure metal, alloy or metal oxide.

In the anode material, the metal catalyst may be composed of pure Ni, and the proportion of the pure Ni to the MgH₂ may be 6at% or smaller. This is because the charge-discharge efficiency of a metal secondary battery can be improved to a level comparable to or higher than that which would be achieved without the use of a metal catalyst.

In the anode material, the proportion of the pure Ni to the MgH₂ may be in the range of 1at% to 5at%. Alternatively, in the anode material, the proportion of the pure Ni to the MgH₂ may be in the range of 1at% to 4at%.

In the anode material, the proportion of the pure Ni to the MgH₂ may be in the range of 2at% to 4at%. This is because the charge-discharge efficiency of a metal secondary battery can be remarkably improved.

The anode material may further contain a conductive material that improves the electron conductivity of the anode material. This is because the anode material can have better electron conductivity.

The anode material may be refined by mechanical milling. This is because refinement of the particle size of each material that is contained in the anode material, which is effective in improving the reversibility of the conversion reaction, can be easily achieved.

In the anode material, the metal catalyst may be supported on the MgH₂.

The metal secondary battery of the present invention includes a cathode active material layer, an anode active material layer, and an electrolyte layer that is formed between the cathode active material layer and the anode active material layer. In the metal secondary battery, the anode active material layer contains the anode material that is described above.

The use of the aforementioned anode material provides a metal secondary battery with improved charge-discharge efficiency.

Another aspect of the present invention relates to a method for the production of a metal secondary battery comprising an anode material. The production method includes a contacting step of contacting MgH₂ with a metal catalyst that improves the reversibility of a conversion reaction.

The anode material that improves the charge-discharge efficiency of a metal secondary battery can be obtained by contacting MgH₂ with a metal catalyst.

In the above production method, a precursor composition that contains MgH₂ and the metal catalyst may be subjected to a mixing process in the contacting step.

In the production method, the mixing process may be a process in which the precursor composition is refined by mechanical milling. This is because refinement of the particle size of each material, which is effective in improving the reversibility of the conversion reaction, can be easily achieved.

In the production method, the mechanical milling may be performed in a ball mill.

In the production method, the precursor composition may further contain a conductive material that improves the electron conductivity of the anode material. This is because the anode material can have better electron conductivity.

The anode materials according to the first to fourth aspects of the present invention are effective in improving the charge-discharge efficiency of a metal secondary battery.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a schematic cross-sectional view that illustrates an example of a metal secondary battery according to an embodiment of the present invention;
FIG. 2A is a flowchart that exemplifies a method for the production of an anode material according to an embodiment of the present invention;
FIG 2B is a flowchart that exemplifies a method for the production of an anode material according to an embodiment of the present invention;
FIG. 3A is a flowchart that shows a procedure in Example 2-1 and Comparative Example 1;
FIG. 3B is a flowchart that shows a procedure in Example 2-1 and Comparative Example 1;
FIG. 4A shows results of evaluation of hydrogen release properties of the anode materials that were obtained in Example 2-1 and Comparative Example 1;
FIG. 4B shows results of evaluation of hydrogen occlusion properties of the anode materials that were obtained in Example 2-1 and Comparative Example 1;
FIG. 5 shows results of evaluation of charge-discharge properties of the batteries for evaluation that were prepared using the anode materials that were obtained in Example 2-1 and Comparative Example 1;
FIG. 6 shows results of evaluation of charge-discharge properties of the batteries for evaluation that were prepared using the anode materials that were obtained in Example 2-3 and Comparative Example 1; and
FIG. 7 shows results of evaluation of charge-discharge properties of the batteries for evaluation that were prepared using the anode materials that were obtained in Example 2-1 to 2-6 and Comparative Example 1.

### DETAILED DESCRIPTION OF EMBODIMENTS

Description is hereinafter made in detail of an anode material, a metal secondary battery, and method for the production of an anode material according to embodiments of the present invention.

### A. Anode Material

First, the anode material according to an embodiment of the present invention is described. The anode material according to an embodiment of the present invention is an anode material for use in a metal secondary battery, and contains MgH₂ and a metal catalyst which is in contact with the MgH₂ and improves the reversibility of a conversion reaction.

According to the embodiment of the present invention, addition of the metal catalyst to an active material MgH₂ promotes the reaction that is represented by the reaction formula 2, for example. As a result, the charge-discharge efficiency of a metal secondary battery can be improved. For the promotion of the reaction that is represented by the reaction formula 2, for example, a reaction that involves removal of hydrogen from LiH (LiH dissociative reaction) and a reaction that involves addition of hydrogen to Mg are critical. It is considered that the metal catalyst promotes one or both of the reactions.

Next, a putative mechanism by which the metal catalyst improves the reversibility of a conversion reaction is described. When Li⁺ is incorporated into MgH₂ (when a reaction that is represented by the reaction formula 1 occurs), Mg and LiH are generated. When this state is measured using X-ray diffraction (XRD), a peak that is derived from Mg is observed but a peak that is derived from LiH is not observed. It is therefore assumed that crystalline Mg particles are formed in a floating island fashion in amorphous LiH.

On the other hand, it is observed that a slight amount of hydrogen gas is generated during an electrochemical reaction between MgH₂ and Li⁺. It is therefore considered that the metal catalyst dissociatively adsorbs the generated hydrogen gas (i.e., the metal catalyst dissociates and adsorbs the generated hydrogen gas) and the dissociatively adsorbed hydrogen reacts with Mg to form MgH₂. In other words, in this putative mechanism, the metal catalyst promotes the reaction that involves addition of hydrogen to Mg. In addition, this putative mechanism is considered to be similar to that of a reaction in which hydrogen is occluded by a hydrogen storage alloy. It should be noted that while the metal catalyst dissociatively adsorbs the generated hydrogen gas in the above description, the metal catalyst may adsorb hydrogen that is desorbed from LiH before the hydrogen is converted into hydrogen gas. In addition, the metal catalyst may promote the LiH dissociative reaction itself.

The MgH₂ in the embodiment of the present invention usually serves as an active material, and reacts with Li ions to form LiH and Mg, for example. The Mg (zero-valent) that is generated as a result of the reaction with Li ions is further subjected to an alloying reaction with Li ions and occludes Li to form Li₃Mg₇. MgH₂ can provide a significantly large Li occlusion capacity as described above, but is less likely to induce a reverse reaction (the reaction that is represented by the reaction formula 2, in particular) and therefore may reduce the charge-discharge efficiency. In the embodiment of the present invention, this problem is solved by using a metal catalyst.

The MgH₂ in the embodiment of the present invention may be in the form of further refined particles. This is because refinement of the particle size of MgH₂ can further improve the reversibility of the conversion reaction. The MgH₂ preferably has an average particle size of, for example, 2 µm or smaller, more preferably in the range of 0.1 µm to 1 µm. The average particle size of MgH₂ can be calculated by measuring particle sizes of MgH₂ particles (100 particles, for example) under an SEM (scanning electron microscope) and obtaining the average of the particle sizes. When the average particle size of MgH₂ is significantly different from those of the metal catalyst and conductive material, which are described later, the average particle size (d₅₀) of MgH₂ particles may be obtained by particle size distribution measurement.

The content of MgH₂ in the anode material according to the embodiment of the present invention is not specifically limited, but is preferably 40% by weight or greater, more preferably in the range of 60% by weight to 98% by weight, for example.

The metal catalyst in the embodiment of the present invention is in contact with the MgH₂ and improves the reversibility of a conversion reaction. Improvement in the reversibility of a conversion reaction can be specified by preparing batteries for evaluation and measuring their charge-discharge efficiencies as in Examples, which are described later. The metal catalyst, which is required to be in contact with the MgH₂, may be supported on the MgH₂. In addition, the metal catalyst in the embodiment of the present invention may promote at least one of a reaction that involves removal of hydrogen from MH (M represents Li, for example) and a reaction that involves addition of hydrogen to Mg as described above. This is because at least one of the hydrogen removal reaction and the hydrogen addition reaction may determine the rate, or the speed, of the reverse reaction of the conversion reaction (the reaction that is represented by the reaction formula 2, for example).

The metal catalyst in the embodiment of the present invention is not specifically limited as long as it can improve the reversibility of the conversion reaction, and may be a catalyst which dissociates LiH or a catalyst which can dissociatively adsorb hydrogen, for example. The term "catalyst which can dissociatively adsorb hydrogen" includes both a catalyst which can dissociatively adsorb H₂ gas and a catalyst which adsorbs hydrogen that is desorbed from LiH before the hydrogen is converted into hydrogen gas.

The metal catalyst in the embodiment of the present invention preferably contains a transition metal element. This is because it is believed that the 3d, 4d and 4f orbits or the like of transition metal elements improve the reversibility of the conversion reaction. In addition, there is a possibility that these orbits significantly contribute to the dissociation of LiH and the dissociative adsorption of H₂ gas. The transition metal element is not specifically limited as long as it is an element that is classified as a transition metal element on the periodic table, and may be at least one element that is selected from the group that consists of Ti, V, Cr, Mn, Co, Ni, Zr, Nb, Pd, La, Ce and Pt. This is because the charge-discharge efficiency of a metal secondary battery can be significantly improved as described in Examples, which are described later. The metal catalyst in the embodiment of the present invention may be composed of a pure metal, alloy or metal oxide, for example. In particular, the metal catalyst in the embodiment of the present invention may be composed of pure Ni or a Ni alloy.

The metal catalyst in the embodiment of the present invention may be in the form of further refined particles. This is because refinement of the particle size of the metal catalyst can further improve the reversibility of the conversion reaction. The metal catalyst preferably has an average particle size of, for example, 1 µm or smaller, more preferably in the range of 10 nm to 500 nm, for example. The average particle size of the metal catalyst can be also determined by observation under an SEM or by particle size distribution measurement.

The proportion of the metal catalyst to MgH₂ is not specifically limited as long as the charge-discharge efficiency of a metal secondary battery can be higher than that which would be obtained without the use of the metal catalyst. The proportion of the metal catalyst to MgH₂ is preferably in the range of 0.1at% to 10at%, more preferably in the range of 0.5at% to 6at%, for example. This is because the reversibility of the conversion reaction may not be sufficiently improved when the proportion of the metal catalyst is too small and the relatively small proportion of MgH₂ may lead to a significant decrease in capacity when the proportion of the metal catalyst is too large. The proportion of the metal catalyst to MgH₂ can also be determined by SEM-EDX.

In particular, when pure Ni is used as the metal catalyst, the proportion of the pure Ni to MgH₂ may be such that the charge-discharge efficiency of a metal secondary battery can be higher than that which would be obtained without the use of the metal catalyst. Specifically, the proportion of the pure Ni is preferably 6at% or smaller, more preferably in the range of 1at% to 5at%, much more preferably in the range of 1at% to 4at%, still much more preferably in the range of 2at% to 4at%.

The anode material according to the embodiment of the present invention may further contain a conductive material. This is because the anode material can have better electron conductivity. The conductive material is preferably in contact with the MgH₂, and is more preferably supported on the MgH₂. This is because an electron-conduction path can be established easily. The conductive material is not specifically limited, and examples of the conductive material include carbon materials such as mesocarbon microbeads (MCMB), acetylene black, Ketjen black, carbon black, coke, carbon fibers and graphite.

The conductive material in the embodiment of the present invention is preferably in the form of further refined particles. This is because it can contribute to improvement in electron conductivity. The conductive material has an average particle size of 2 µm or smaller, more preferably in the range of 0.1 µm to 1 µm, for example. The average particle size of the conductive material can be also determined by observation under an SEM or by particle size distribution measurement.

The content of the conductive material in the anode material according to the embodiment of the present invention is not specifically limited, but is preferably in the range of 1% by weight to 60% by weight, more preferably in the range of 2% by weight to 40% by weight, for example. This is because the electron conductivity may not be sufficiently improved when the proportion of the conductive material is too small and the relatively small proportions of the MgH₂ and metal catalyst may lead to a significant decrease in capacity or little improvement in the reversibility when the proportion of the conductive material is too large.

Each material that is contained in the aforementioned anode material according to the embodiment of the present invention is preferably in the form of further refined particles. This is .because refinement of the particle size of each material can further improve the reversibility of the conversion reaction. In particular, the anode material according to the embodiment of the present invention is preferably refined by mechanical milling. The mechanical milling is described in the section that is entitled "C. Method for Production of Anode Material" below.

The anode material according to the embodiment of the present invention is usually used in a metal secondary battery (metal ion secondary battery). The aforementioned reaction formulae 1 and 2 apply to a lithium secondary battery but the behavior of MgH₂ in the conversion reaction is believed to be the same with a metal other than lithium. Thus, the anode material according to the embodiment of the present invention can be used in other metal secondary batteries than a lithium secondary battery. Examples of the metal secondary batteries include lithium secondary batteries, sodium secondary batteries, potassium secondary batteries, magnesium secondary batteries and calcium secondary batteries. Above all, lithium secondary batteries, sodium secondary batteries and potassium secondary batteries are preferred, and especially preferred are lithium secondary batteries.

### B. Metal Secondary Battery

The metal secondary battery according to an embodiment of the present invention is next described. The metal secondary battery according to an embodiment of the present invention is a metal secondary battery that has a cathode active material layer, an anode active material layer, and an electrolyte layer that is formed between the cathode active material layer and the anode active material layer. The anode active material layer contains the aforementioned anode material.

According to the embodiment of the present invention, the use of the aforementioned anode material provides a metal secondary battery with improved charge-discharge efficiency.

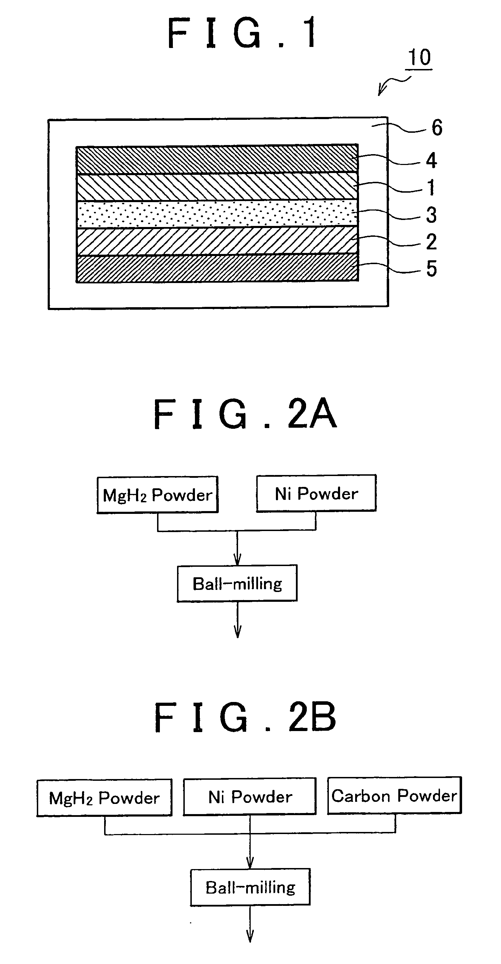

FIG. 1 is a schematic cross-sectional view that illustrates an example of a metal secondary battery according to an embodiment of the present invention. A metal secondary battery 10 that is shown in FIG. 1 has a cathode active material layer 1, an anode active material layer 2, an electrolyte layer 3 that is formed between the cathode active material layer 1 and the anode active material layer 2, a cathode current collector 4 that collects current from the cathode active material layer 1, an anode current collector 5 that collects current from the anode active material layer 2, and a battery case 6 that houses the above members. In the embodiment of the present invention, the anode active material layer 2 contains the anode material that is described in the section entitled "A. Anode Material" above. In the following, each of the constituent elements of the metal secondary battery according to the embodiment of the present invention is described.

### 1. Anode Active Material Layer

The anode active material layer in the embodiment of the present invention is first described. The anode active material layer in the embodiment of the present invention is a layer that contains at least the aforementioned anode material, and may optionally contain at least one of a conductive material and a binder. The content of the anode material in the anode active material layer is not specifically limited, but is preferably 20% by weight or greater, more preferably in the range of 40% by weight to 80% by weight, for example. Although the anode material itself may contain a conductive material as described above, the anode active material layer may also contain a conductive material. The conductive material that is contained in the anode material and the optionally added conductive material may be the same or different. Specific examples of the conductive material are the same as set forth above. Examples of the pinder include fluorine-containing binders such as polyvinylidene fluoride (PVDF). The anode active material layer preferably has a thickness in the range of 0.1 µm to 1000 µm, for example.

### 2. Cathode Active Material Layer

The cathode active material layer in the embodiment of the present invention is next described. The cathode active material layer in the embodiment of the present invention is a layer that contains at least a cathode active material and may optionally contain at least one of a conductive material and a binder. The type of the cathode active material is preferably selected as appropriate based on the type of the metal secondary battery. For example, examples of the cathode active material that can be used in a lithium secondary battery include layer-type cathode active materials such as LiCoO₂, LiNiO₂, LiCo_{1/3}Ni_{1/3}Mn_{1/3}O₂, LiVO₂ and LiCrO₂, spinel-type cathode active materials such as LiMn₂O₄, Li(Ni_{0.25}Mn_{0.75})₂O₄, LiCoMnO₄ and Li₂NiMn₃O₈, and olivine-type cathode active materials such as LiCoPO₄, LiMnPO₄ and LiFePO₄. The content of the cathode active material in the cathode active material layer is not specifically limited, but is preferably in the range of 40% by weight to 99% by weight, for example.

The cathode active material layer in the embodiment of the present invention may optionally contain at least one of a conductive material and a binder. Examples of the conductive material and the binder are the same as set forth in the section that is entitled "1. Anode Active Material Layer" above, and their description are omitted here. The cathode active material layer preferably has a thickness in the range of 0.1 µm to 1000 µm, for example.

### 3. Electrolyte Layer

The electrolyte layer in the embodiment of the present invention is next described. The electrolyte layer in the embodiment of the present invention is a layer that is formed between the cathode active material layer and the anode active material layer. Metal ions are transferred between the cathode active material and the anode active material via an electrolyte that is contained in the electrolyte layer. The form of the electrolyte layer is not specifically limited, and examples of the form of the electrolyte layer include a liquid electrolyte layer, a gel electrolyte layer, and a solid electrolyte layer, for example.

A liquid electrolyte layer is usually a layer that is composed of a non-aqueous electrolytic solution. The non-aqueous electrolytic solution usually contains a metal salt and a non-aqueous solvent. The type of the metal salt is preferably selected as appropriate based on the type of the metal secondary battery. Examples of the metal salt that is used in a lithium secondary battery include, inorganic lithium salts such as LiPF₆, LiBF₄, LiClO₄ and LiAsF₆, and organic lithium salts such as LiCF₃SO₃, LiN(CF₃SO₂)₂, LiN(C₂F₅SO₂)₂ and LiC(CF₃SO₂)₃. Examples of the non-aqueous solvent include ethylene carbonate (EC), propylene carbonate (PC), dimethyl carbonate (DMC), diethyl carbonate (DEC), ethylmethyl carbonate (EMC), butylene carbonate (BC), γ-butyrolactone, sulfolane, acetonitrile, 1,2-dimethoxymethane, 1,3-dimethoxypropane, diethyl ether, tetrahydrofuran, 2-methyltetrahydrofuran, and mixtures of these compounds. The concentration of the metal salt in the non-aqueous electrolytic solution is in the range of 0.5 mol/L to 3 mol/L, for example. In the embodiment of the present invention, a low-volatile liquid, such as an ionic liquid, may be used as the non-aqueous electrolytic solution. A separator may be provided between the cathode active material layer and the anode active material layer.

The thickness of the electrolyte layer significantly differs depending on the type of the electrolyte or the configuration of the battery, and is preferably in the range of 0.1 µm to 1000 µm, particularly preferably in the range of 0.1 µm to 300 µm, for example.

### 4. Other Configuration

The metal secondary battery according to the embodiment of the present invention may further include a cathode current collector that collects current from the cathode active material layer, and a anode current collector that collects current from the anode active material layer. Examples of the material for the cathode current collector include SUS, aluminum, nickel, iron, titanium and carbon. Above all, aluminum is preferred. Examples of the material for the anode current collector include SUS, copper, nickel and carbon. Above all, copper is preferred. As the battery case for use in the embodiment of the present invention, a battery case for an ordinary metal secondary battery may be used. Examples of the battery case include an SUS battery case.

### 5. Metal Secondary Battery

Examples of the metal secondary batteries according to the embodiment of the present invention include lithium secondary batteries, sodium secondary batteries, potassium secondary batteries, magnesium secondary batteries and calcium secondary batteries. Above all, lithium secondary batteries, sodium secondary batteries and potassium secondary batteries are preferred, and especially preferred are lithium secondary batteries. The metal secondary battery according to the embodiment of the present invention is preferably used as a battery for a vehicle; for example. Examples of the shape of the metal secondary battery according to the embodiment of the present invention include coin, laminate, cylinder and box. The method for the production of the metal secondary battery according to the embodiment of the present invention is not specifically limited as long as the metal secondary battery as described above can be obtained, and the metal secondary battery may be produced by the same method as used to produce ordinary metal secondary batteries.

### C. Method for Production of Anode Material

A method for the production of an anode material according to an embodiment of the present invention is next described. The method for the production of an anode material according to the embodiment of the present invention is a method for the production of an anode material for use in a metal secondary battery, and may include a contacting step of contacting MgH₂ with a metal catalyst that improves the reversibility of a conversion reaction.

According to the embodiment of the present invention, an anode material that improves the charge-discharge efficiency of a metal secondary battery can be obtained by contacting MgH₂ with a metal catalyst.

FIG 2A and 2B are flowcharts that exemplify a method for the production of an anode material according to an embodiment of the present invention. In the method that is shown in FIG 2A, a MgH₂ powder as an active material and an Ni powder as a metal catalyst are first prepared and mixed at a predetermined ratio to obtain a precursor composition (a basic composition). Then, the precursor composition is refined by ball milling. As a result, an anode material can be obtained. On the other hand, in the method that is shown in FIG. 2B, a MgH₂ powder as an active material, an Ni powder as a metal catalyst and a carbon powder as a conductive material are first prepared and mixed at a predetermined ratio to obtain a precursor composition. Then, the precursor composition is refined by ball milling. As a result, an anode material can be obtained.

The contacting step in the embodiment of the present invention is a step of contacting MgH₂ with a metal catalyst. Examples of the method for contacting the MgH₂ with the metal catalyst include a mixing process in which MgH₂ and the metal catalyst are mixed together or a depositing process in which one of the MgH₂ and the metal catalyst is supported on the other.

Examples of the mixing process include mechanical milling in which mechanical energy is applied during mixing and simple mixing in which no mechanical force is applied. Examples of the depositing process include sol-gel method, PVD and CVD.

In the embodiment of the present invention, the mixing process is preferably a process in which the precursor composition is refined by mechanical milling. This is because refinement of the particle size of each material that is contained in the precursor composition, which is effective in improving the reversibility of the conversion reaction, can be easily achieved. In particular, it is believed that refinement of the particle size of MgH₂ improves the reversibility of the conversion reaction. This is believed to be because refinement of the particle size of MgH₂ increases the specific surface area thereof, which accelerates the reaction that is represented by the reaction formula 2. In addition, it is believed that refinement of the particle size of MgH₂ shortens the diffusion path for Li, thus the reactivity is enhanced. Another advantage that is provided by refinement of the particle size of MgH₂ is a decrease in overvoltage during the Li insertion reaction (which is represented by the reaction formula 1).

The precursor composition in the embodiment of the present invention contains at least MgH₂ and a metal catalyst, and may optionally contain a conductive material. These materials and their composition ratio are the same as described in the section entitled "A. Anode Material" above, and therefore their description is omitted here.

The mechanical milling is a method in which mechanical energy is applied while the ingredients are mixed. During refinement by mechanical milling, the particles of the materials that are contained in the precursor composition collide vigorously with each other. Therefore, the materials that are contained in the precursor composition are refined more finely than in a simple refinement process (for example, refinement using a mortar). In addition, refinement by mechanical milling can disperse the metal catalyst and the conductive material uniformly over the surfaces of the MgH₂ particles. Examples of the devices for the mechanical milling in the embodiment of the present invention include ball mill, vibration mill, turbo mill and disk mill. Above all, a ball mill is preferred and a planetary ball mill is particularly preferred.

The conditions for the mechanical milling are set to provide a desired anode material. For example, when a planetary ball mill is used to prepare the anode material, the precursor composition and milling balls are charged in a pot and processed at a predetermined rotational speed for a predetermined period of time. The rotational speed of the base plate during the milling using a planetary ball mill is preferably in the range of 100 rpm to 1000 rpm, particularly preferably in the range of 200 rpm to 600 rpm, for example. The processing time of the milling using a planetary ball mill is preferably in the range of 1 hour to 100 hours, particularly preferably in the range of 2 hours to 10 hours, for example. In the embodiment of the present invention, the mechanical milling is preferably carried out until each material that is contained in the precursor composition has a predetermined average particle size. The average particle size of each material is the same as described in the section entitled "A. Anode Material" above, and therefore their description is omitted here.

It should be noted that the present invention is not limited to the above embodiments. The above embodiments are only for illustrative purpose, and anything that has substantially the same constitution and produces the same effects as a technical idea that is described in the claims of the present invention is included in the technical scope of the present invention.

The following examples describe the present invention in further detail.

### [Example 1-1]

A MgH₂ powder (average particle size: 30 µm) and an Ni powder (average particle size: 100 nm) as a metal catalyst were prepared. The Ni powder was added to the MgH₂ powder in an amount of 1at% of the MgH₂ powder to obtain a precursor composition. The precursor composition and zirconia milling balls (ϕ = 10 mm) were charged in a vessel for a planetary ball mill at a weight ratio of 1:40 (precursor composition:zirconia milling ball = 1:40) in an Ar atmosphere and the vessel was sealed. The vessel was attached to the planetary ball mill, and refinement was carried out at a base plate rotational speed of 400 rpm for 5 hours. As a result, an anode material was obtained. In the obtained anode material, the MgH₂ powder had an average particle size of 0.5 µm, and the Ni powder had an average particle size of 20 nm.

### [Example 1-2 to 1-6]

Anode materials were obtained in the same manner as in Example 1-1 except that the proportion of the Ni powder to the MgH₂ powder was changed to 2at%, 3at%, 4at%, 5at% and 6at%, respectively.

### [Example 2-1]

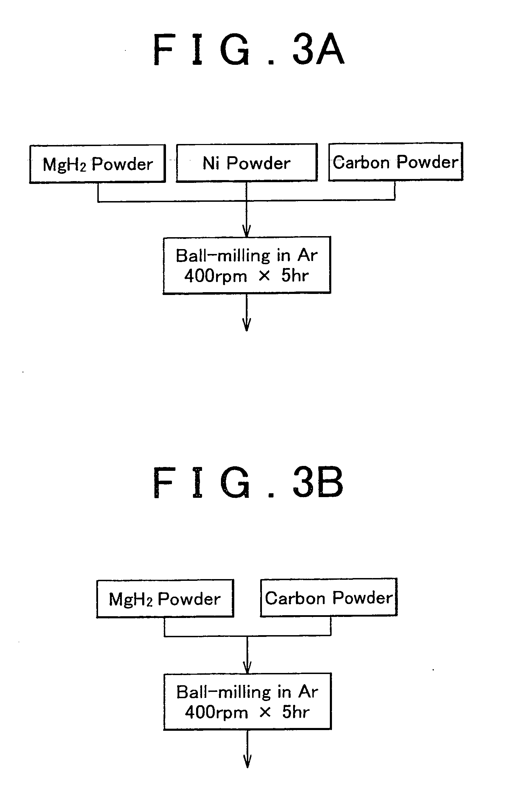

FIG. 3A is a flowchart that shows a procedure in Example 2-1. First, a carbon powder (MCMB, average particle size: 1 µm) was prepared in addition to the same MgH₂ powder and the Ni powder as used in Example 1-1. The carbon powder had been prepared by processing a commercially available MCMB powder (average particle size: 20 µm) in a planetary ball mill (at 400 rpm for 5 hours). The Ni powder was added to the MgH₂ powder in an amount of 1at% of the MgH₂ powder. The mixture of the MgH₂ powder and the Ni powder and the carbon powder were mixed at a weight ratio of 90:10 ((MgH₂ powder +Ni powder):carbon powder = 90:10) to obtain a precursor composition. An anode material was obtained in the same manner as in Example 1-1 except that the precursor composition that was obtained as described above was used. In the obtained anode material, the MgH₂ powder had an average particle size of 0.5 µm, the Ni powder had an average particle size of 20 nm, and the carbon powder had an average particle size of 0.1 µm.

### [Example 2-2 to 2-6]

Anode materials were obtained in the same manner as in Example 2-1 except that the proportion of the Ni powder to the MgH₂ powder was changed to 2at%, 3at%, 4at%, 5at% and 6at%, respectively.

### [Comparative Example 1]

FIG. 3B is a flowchart that shows a procedure in Comparative Example 1. First, the same MgH₂ powder and carbon powder as used in Example 2-1 were prepared. The MgH₂ powder and the carbon powder were mixed at a weight ratio of 90:10 (MgH₂ powder:carbon powder = 90:10) to obtain a precursor composition. An anode material was obtained in the same manner as in Example 1-1 except that the precursor composition that was obtained as described above was used.

### [Evaluation 1]

### (Evaluation of Hydrogen Occlusion/Release Properties)

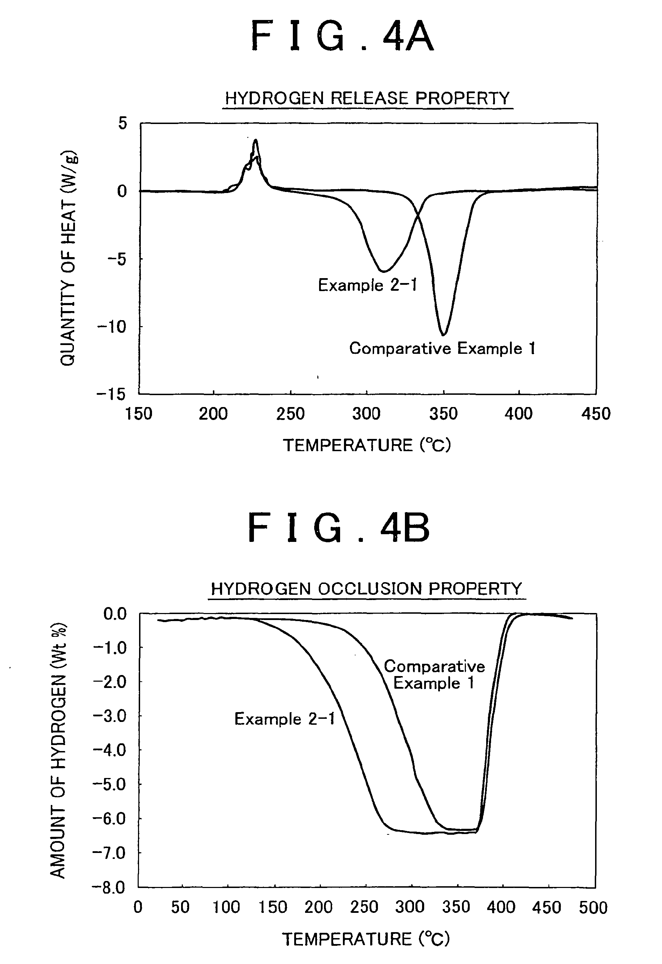

The hydrogen release temperature and hydrogen occlusion temperature of each of the anode materials that were obtained in Example 2-1 and Comparative Example 1 were measured to evaluate their hydrogen occlusion/release properties. The hydrogen release temperature was measured by differential scanning calorimetry (DSC measurement, from room temperature to 450°C, 5°C/min), and the hydrogen occlusion temperature was measured by PCT measurement (pressure-composition isotherm measurement, samples were completely dehydrated by a heat treatment at 450°C and pressurized with 0.9 MPa hydrogen, from room temperature to 450°C, 5°C/min). The results are summarized in Table 1 and FIG. 4A and FIG. 4B.

**[Table 1]**

| | Composition | Amount of Ni Added (at %) | Hydrogen occlusion temperature (°C) | Hydrogen release temperature (°C) |
|---|---|---|---|---|
| Example 2-1 | MgH₂, Ni, C | 1.0 | 226 | 312 |
| Comparative example 1 | MgH₂, C | 0 | 282 | 351 |

As shown in Table 1 and FIG. 4A and FIG. 4B, it was observed that the anode material of Example 2-1 had significantly lower hydrogen occlusion temperature and hydrogen release temperature than the anode material of Comparative Example 1. The results of measurement of hydrogen release temperature indicate that the anode material of Example 2-1 is more likely to induce the reaction that is represented by the reaction formula 1 than the anode material of the Comparative Example 1. On the other hand, the results of measurement of hydrogen occlusion temperature indicate that the anode material of Example 2-1 is more likely to induce the reaction that is represented by the reaction formula 2 than the anode material of Comparative Example 1.

MgH₂ + 2Li⁺ + 2e⁻ → Mg + 2LiH (Reaction formula 1)

Mg + 2LiH → MgH₂ + 2Li⁺ + 2e⁻ (Reaction formula 2)

### (Evaluation of Batteries)

Batteries for evaluation were prepared using the anode materials that were obtained in Example 2-1 to 2-6 and Comparative Example 1. Each anode material obtained as described above, a conductive material (acetylene black 60wt% + VGCF 40wt%), and a binder (polyvinylidene fluoride, PVDF) were mixed at a weight ratio of 45:40:15 (anode material:conductive material:binder = 45:40:15) and kneaded to obtain a paste. The obtained paste was applied to a copper foil with a doctor blade, and then dried and pressed to obtain a test electrode with a thickness of 10 µm.

A CR2032 coin cell was used, and the test electrode was used as a working electrode, Li metal was used as a counter electrode and a polyethylene/polypropylene/polyethylene porous separator was used as a separator. As an electrolytic solution, a solution of LiPF₆ as a supporting electrolyte in a solvent obtained by mixing ethylene carbonate (EC), dimethyl carbonate (DMC) and ethylmethyl carbonate (EMC) at a volume ratio of 3:3:4 (EC:DMC:EMC = 3:3:4) at a concentration of 1 mol/L was used. These material were used to prepare a battery for evaluation.

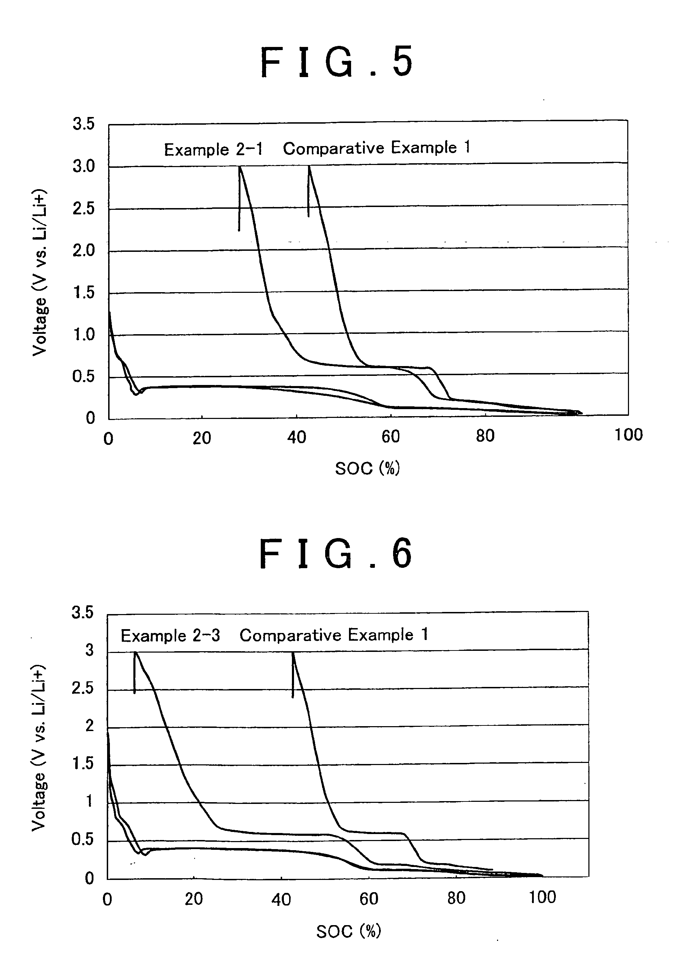

The obtained batteries for evaluation were charged and discharged at a battery evaluation environment temperature of 25°C and a current rate of C/50. The voltage was in the range of 0.01 V to 3.0 V. The results in Example 2-1 and Comparative Example 1 are summarized in Table 2 and FIG. 5.

**[Table 2]**

| | Composition | Amount of Ni Added (at%) | Li insertion capacity (mAh/g) | Li desorption capacity (mAh/g) | Charge-discharge efficiency η (%) |
|---|---|---|---|---|---|
| Example 2-1 | MgH₂, Ni, C | 1.0 | 2869 | 2071 | 72.2 |
| Comparative example 1 | MgH₂, C | 0 | 3020 | 1742 | 57.7 |

Table 2 and FIG 5 indicate that the addition of Ni as a metal catalyst significantly improves the charge-discharge efficiency. The results in Example 2-3 and Comparative Example 1 are summarized in Table 3 and FIG. 6.

**[Table 3]**

| | Composition | Amount of Ni Added (at%) | Li insertion capacity (mAh/g) | Li desorption capacity (mAh/g) | Charge-discharge efficiency η (%) |
|---|---|---|---|---|---|
| Example 2-3 | MgH₂, Ni, C | 3.0 | 2778 | 2608 | 93.9 |
| Comparative example 1 | MgH₂, C | 0 | 3020 | 1742 | 57.7 |

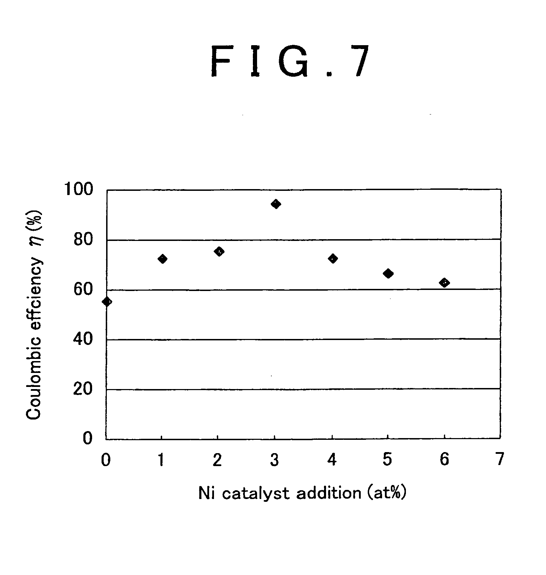

Table 3 and FIG. 6 indicate that the addition of 3at% of Ni as a metal catalyst significantly improves the charge-discharge efficiency. FIG. 7 shows results of evaluation of charge-discharge properties of the batteries for evaluation that were prepared using the anode materials that were obtained in Examples 2-1 to 2-6 and Comparative Example 1. As shown in FIG. 7, all of the batteries for evaluation of Examples 2-1 to 2-6 had better charge-discharge efficiency than the batteries for evaluation of Comparative Example 1. In particular, the charge-discharge efficiency was significantly improved when 2at% to 4at% of Ni was added.

### [Examples 3-1 to 3-21]

The anode material of Example 3-1 was the same as the anode material of Example 2-1. In Examples 3-2 to 3-21, an anode materials was obtained in the same manner as in Example 3-1 except that the metal catalyst was changed to the substance that is shown in Table 4.

### [Evaluation 2]

Batteries for evaluation were prepared using the anode materials that were obtained in Example 3-1 to 3-21 and Comparative Example 1, and the charge-discharge efficiency of each battery for evaluation was measured. The method for the production of the batteries for evaluation and the method for the measurement of charge-discharge efficiency were the same as described above. The result is summarized in Table 4.

**[Table 4]**

| | Metal catalyst | Charge-discharge efficiency η (%) | | Metal catalyst | Charge-discharge efficiency η (%) |
|---|---|---|---|---|---|
| Comparative example 1 | - | 57.7 | Example 3-11 | TiO₂ | 75.3 |
| Example 3-1 | Ni | 72.2 | Example 3-12 | La₂O₃ | 74.8 |
| Example 3-2 | Ti | 74.7 | Example 3-13 | CeO₂ | 73.5 |
| Example 3-3 | Co | 75.5 | Example 3-14 | MnO₂ | 76.8 |
| Example 3-4 | Pt | 77.5 | Example 3-15 | NiTi | 72.5 |
| Example 3-5 | Pd | 74.1 | Example 3-16 | Mg₂Ni | 73.9 |
| Example 3-6 | NiO | 73.1 | Example 3-17 | NiPt | 75.6 |
| Example 3-7 | CoO | 74.2 | Example 3-18 | AlNi | 73.0 |
| Example 3-8 | ZrO₂ | 73.7 | Example 3-19 | NiSi | 73.5 |
| Example 3-9 | Nb₂O₅ | 79.0 | Example 3-20 | LaNi₅ | 76.8 |
| Example 3-10 | V₂O₅ | 77.2 | Example 3-21 | TiCrV | 76.4 |

As shown in Table 4, it was observed that the charge-discharge efficiency can be remarkably improved by adding various types of metal catalysts. The batteries for evaluation of Examples 3-1 to 3-21 contained a conductive material. When the same experiment was conducted without using a conductive material, the charge-discharge efficiencies were not as high as the values that are shown in Table 4 but higher than those of systems that were prepared without the use of a metal catalyst.

## Claims

1. A metal secondary battery comprising:
a cathode active material layer (1);
an anode active material layer (2); and
an electrolyte layer (3) that is formed between the cathode active material layer and the anode active material layer,
**characterized in that** the anode active material layer contains an anode material including MgH₂; and a metal catalyst is in contact with the MgH₂ and improves the reversibility of a conversion reaction.

2. The metal secondary battery according to claim 1,
wherein the metal catalyst is a catalyst that dissociates LiH or a catalyst that dissociatively adsorbs hydrogen.

3. The metal secondary battery according to claim 1 or 2,
wherein the metal catalyst contains a transition metal element.

4. The metal secondary battery according to claim 3,
wherein the transition metal element is at least one element that is selected from the group that consists of Ti, V, Cr, Mn, Co, Ni, Zr, Nb, Pd, La, Ce and Pt.

5. The metal secondary battery according to any one of claims 1 to 4,
wherein the metal catalyst is composed of a pure metal, alloy or metal oxide.

6. The metal secondary battery according to any one of claims 1 to 5,
wherein the metal catalyst is composed of pure Ni, and the proportion of the pure Ni to the MgH₂ is 6at% or smaller.

7. The metal secondary battery according to claim 6,
wherein the proportion of the pure Ni to the MgH₂ is in the range of 1at% to 5at%.

8. The metal secondary battery according to claim 7,
wherein the proportion of the pure Ni to the MgH₂ is in the range of 1at% to 4at%.

9. The metal secondary battery according to claim 8,
wherein the proportion of the pure Ni to the MgH₂ is in the range of 2at% to 4at%.

10. The metal secondary battery according to any one of claims 1 to 9, wherein the anode material
includes a conductive material that improves electron conductivity of the anode material.

11. The metal secondary battery according to any one of claims 1 to 10,
wherein the anode material is refined by mechanical milling.

12. The metal secondary battery according to any one of claims 1 to 11,
wherein the metal catalyst is supported on the MgH₂.

13. A method for the production of a metal secondary battery, **characterized by** comprising:
a contacting step of contacting MgH₂ with a metal catalyst that improves the reversibility of a conversion reaction to form an anode material for the metal secondary battery.

14. The production method according to claim 13,
wherein a precursor composition that contains MgH₂ and the metal catalyst is subjected to a mixing process in the contacting step.

15. The production method according to claim 14,
wherein the mixing process is a process in which the precursor composition is refined by mechanical milling.

16. The production method according to claim 15,
wherein the mechanical milling is performed in a ball mill.

17. The production method according to any one of claims 14 to 16,
wherein the precursor composition further contains a conductive material that improves the electron conductivity of the anode material.

## Patentansprüche

1. Metallsekundärbatterie, aufweisend:
eine Kathoden-Aktivmaterialschicht (1);
eine Anoden-Aktivmaterialschicht (2); und
eine Elektrolytschicht (3), die zwischen der Kathoden-Aktivmaterialschicht und
der Anoden-Aktivmaterialschicht ausgebildet ist,
**dadurch gekennzeichnet, dass** die Anoden-Aktivmaterialschicht ein Anodenmaterial beinhaltet, das MgH₂ beinhaltet; und dass ein Metallkatalysator mit dem MgH₂ in Kontakt steht und die Umkehrbarkeit einer Konversionsreaktion verbessert.

2. Metallsekundärbatterie nach Anspruch 1,
wobei der Metallkatalysator ein Katalysator ist, der LiH dissoziiert oder ein Katalysator, der Wasserstoff dissoziativ adsorbiert.

3. Metallsekundärbatterie nach Anspruch 1 oder 2,
wobei der Metallkatalysator ein Übergangsmetallelement enthält.

4. Metallsekundärbatterie nach Anspruch 3,
wobei das Übergangsmetallelement zumindest ein Element ist, das aus der Gruppe ausgewählt wird, die aus Ti, V, Cr, Mn, Co, Ni, Zr, Nb, Pd, La, Ce und Pt besteht.

5. Metallsekundärbatterie nach einem der Ansprüche 1 bis 4,
wobei der Metallkatalysator aus einem Reinmetall, einer Legierung oder einem Metalloxyd besteht.

6. Metallsekundärbatterie nach einem der Ansprüche 1 bis 5,
wobei der Metallkatalysator aus purem Ni besteht und das Verhältnis des puren Ni zu dem MgH₂ 6 AT% oder weniger beträgt.

7. Metallsekundärbatterie nach Anspruch 6,
wobei sich das Verhältnis des puren Ni zu dem MgH₂ in dem Bereich von 1 AT% bis 5 AT% befindet.

8. Metallsekundärbatterie nach Anspruch 7,
wobei sich das Verhältnis des puren Ni zu dem MgH₂ in dem Bereich von 1 AT% bis 4 AT% befindet.

9. Metallsekundärbatterie nach Anspruch 8,
wobei sich das Verhältnis des puren Ni zu dem MgH₂ in dem Bereich von 2 AT% bis 4 AT% befindet.

10. Metallsekundärbatterie nach einem der Ansprüche 1 bis 9,
wobei das Anodenmaterial ein leitfähiges Material beinhaltet, das die Elektronenleitfähigkeit des Anodenmaterials verbessert.

11. Metallsekundärbatterie nach einem der Ansprüche 1 bis 10,
wobei das Anodenmaterial durch mechanisches Fräsen verfeinert wird.

12. Metallsekundärbatterie nach einem der Ansprüche 1 bis 11,
wobei der Metallkatalysator auf dem MgH₂ gelagert ist.

13. Verfahren zur Herstellung einer Metallsekundärbatterie, **dadurch gekennzeichnet, dass** es aufweist:
einen Berührungsschritt, in dem MgH₂ einen Metallkatalysator berührt, der die Umkehrbarkeit einer Konversionsreaktion verbessert, damit ein Anodenmaterial für die Metallsekundärbatterie ausgebildet wird.

14. Herstellungsverfahren nach Anspruch 13,
wobei eine Präkursor-Zusammensetzung, die MgH₂ enthält, und der Metallkatalysator in dem Berührungsschritt einem Mischvorgang unterzogen werden.

15. Herstellungsverfahren nach Anspruch 14,
wobei der Mischvorgang ein Vorgang ist, in dem die Präkursor-Zusammensetzung durch mechanisches Fräsen verfeinert wird.

16. Herstellungsverfahren nach Anspruch 15,
wobei das mechanische Fräsen in einer Kugelmühle durchgeführt wird.

17. Herstellungsverfahren nach einem der Ansprüche 14 bis 16,
wobei die Präkursor-Zusammensetzung ferner ein leitfähiges Material enthält, das die Elektronenleitfähigkeit des Anodenmaterials verbessert.

## Revendications

1. Batterie secondaire métallique comprenant :
une couche de matériau actif de cathode (1) ;
une couche de matériau actif d'anode (2) ; et
une couche d'électrolyte (3) qui est formée entre la couche de matériau actif de cathode et la couche de matériau actif d'anode,
**caractérisée en ce que** la couche de matériau actif d'anode contient un matériau d'anode comprenant du MgH₂ ; et un catalyseur métallique est en contact avec le MgH₂ et améliore la réversibilité d'une réaction de conversion.

2. Batterie secondaire métallique selon la revendication 1,
dans laquelle le catalyseur métallique est un catalyseur qui dissocie LiH ou un catalyseur qui adsorbe l'hydrogène de façon dissociative.

3. Batterie secondaire métallique selon la revendication 1 ou 2,
dans laquelle le catalyseur métallique contient un élément de métal de transition.

4. Batterie secondaire métallique selon la revendication 3,
dans laquelle l'élément de métal de transition est au moins un élément qui est choisi parmi le groupe consistant en Ti, V, Cr, Mn, Co, Ni, Zr, Nb, Pd, La, Ce et Pt.

5. Batterie secondaire métallique selon l'une quelconque des revendications 1 à 4,
dans laquelle le catalyseur métallique est composé d'un métal pur, d'un alliage ou d'un oxyde métallique.

6. Batterie secondaire métallique selon l'une quelconque des revendications 1 à 5,
dans laquelle le catalyseur métallique est composé de Ni pur, et la proportion de Ni pur par rapport au MgH₂ est de 6 % atomique ou moins.

7. Batterie secondaire métallique selon la revendication 6,
dans laquelle la proportion du Ni pur par rapport au MgH₂ est dans la plage de 1 % atomique à 5 % atomique.

8. Batterie secondaire métallique selon la revendication 7,
dans laquelle la proportion du Ni pur par rapport au MgH₂ est dans la plage de 1 % atomique à 4 % atomique.

9. Batterie secondaire métallique selon la revendication 8,
dans laquelle la proportion du Ni pur par rapport au MgH₂ est dans la plage de 2 % atomique à 4 % atomique.

10. Batterie secondaire métallique selon l'une quelconque des revendications 1 à 9, dans laquelle le matériau d'anode
comprend un matériau conducteur qui améliore la conductivité d'électrons du matériau d'anode.

11. Batterie secondaire métallique selon l'une quelconque des revendications 1 à 10,
dans laquelle le matériau d'anode est affiné par fraisage mécanique.

12. Batterie secondaire métallique selon l'une quelconque des revendications 1 à 11,
dans laquelle le catalyseur métallique est supporté sur le MgH₂.

13. Procédé de production d'une batterie secondaire métallique, **caractérisé en ce qu'**il comprend :
une étape de mise en contact consistant à mettre en contact le MgH₂ avec un catalyseur métallique qui améliore la réversibilité d'une réaction de conversion pour former un matériau d'anode pour la batterie secondaire métallique.

14. Procédé de production selon la revendication 13,
dans lequel une composition de précurseur qui contient du MgH₂ et le catalyseur métallique est soumise à un processus de mélange dans l'étape de mise en contact.

15. Procédé de production selon la revendication 14,
dans lequel le processus de mélange est un processus dans lequel la composition de précurseur est affinée par fraisage mécanique.

16. Procédé de production selon la revendication 15,
dans lequel le fraisage mécanique est réalisé dans un broyeur à boulets.

17. Procédé de production selon l'une quelconque des revendications 14 à 16,
dans lequel la composition de précurseur contient en outre un matériau conducteur qui améliore la conductivité d'électrons du matériau d'anode.
